# DEMANDE DE BREVET EUROPEEN

(11) **EP 4 187 409 A1**
(43) Date de publication de la demande: **31.05.2023**
(21) Numéro de dépôt: 21306651.7
(22) Date de dépôt: 29.11.2021
(51) Int. Cl.: G06F 21/30, H04L 9/32, H04L 9/40, H04W 12/06

(54) **PROCÉDÉ ET SYSTÈME D'AUTHENTIFICATION D'UN UTILISATEUR SUR UN SERVEUR D'IDENTITÉ AS A SERVICE**

(71) Demandeur: Bull SAS, 78340 Les Clayes-sous-Bois (FR)
(72) Inventeur: GUIONNEAU, Christophe, 38000 Grenoble (FR)
(74) Mandataire: IPAZ

(57) **Abrégé**

L'invention concerne un procédé (100) d'authentification d'un utilisateur se trouvant dans un réseau informatique, en vue d'accéder à une application en mode SaaS, ledit procédé (100) comprenant les étapes suivantes :
- authentification (102), dite interne, dudit utilisateur auprès d'un serveur d'identification dudit réseau informatique, avec un identifiant utilisateur et un appareil utilisateur dudit réseau informatique (204) ;
-émission (104), par ledit appareil utilisateur vers un serveur IDAAS externe audit réseau informatique, d'une requête d'authentification ; et
-authentification (110), dite externe, dudit utilisateur auprès dudit serveur IDAAS, comprenant les étapes suivantes :
▪ transmission (112), par ledit serveur IDAAS **vers** un serveur web dudit réseau informatique, d'un premier message comprenant un identifiant d'événement associé audit appareil utilisateur,
▪ récupération, par ledit serveur web, dudit identifiant utilisateur,
▪ transmission (120), par ledit serveur web **vers** le serveur IDAAS, d'un deuxième message comprenant ledit identifiant utilisateur pour une authentification dudit utilisateur auprès dudit serveur IDAAS.

Elle concerne également un programme d'ordinateur et un système d'authentification mettant en œuvre un tel procédé.

## Description

**La** présente invention concerne un procédé d'authentification d'un utilisateur sur un serveur d'identité as a service. Elle concerne également un système mettant en œuvre un tel procédé.

**Le** domaine de l'invention est le domaine de l'authentification d'un utilisateur en vue d'accéder à des applications proposées en mode SaaS.

### État de la technique

**Les** entreprises utilisent de plus en plus d'applications "as a service" hébergées dans le cloud, appelées applications SaaS dans la présente demande. Ces applications SaaS nécessitent une authentification des utilisateurs. Pour diverses raisons, les entreprises ont transféré la gestion des identités et des accès vers un fournisseur d'identité as a service, hébergé dans le cloud, dans un serveur externe au réseau informatique de l'entreprise, et appelé serveur IDAAS (« IDentity As A Service »).

Lorsqu'un utilisateur souhaite accéder à une application SaaS depuis l'extérieur du réseau informatique de l'entreprise, il est dirigé vers le serveur IDAAS. Le trafic ne passe jamais par le réseau de l'entreprise.

Dans le cas où l'utilisateur se trouve dans le réseau informatique de l'entreprise, il doit d'abord s'authentifier auprès d'un serveur d'identité strictement interne audit réseau informatique, utilisant un premier mécanisme d'authentification limité audit réseau informatique de l'entreprise, tel que par exemple l'authentification Windows ^{®}. Puis, pour accéder à une application SaaS, il doit s'authentifier auprès du serveur IDAAS suivant un deuxième mécanisme d'authentification indépendant dudit premier mécanisme d'authentification.

Cette double authentification est lourde et chronophage pour les utilisateurs. De plus, elle complexifie la création et la modification des droits d'accès informatiques pour les utilisateurs.

Un but de la présente invention est de remédier à au moins un des inconvénients précités.

Un autre but de la présente invention est de proposer une solution d'authentification moins lourde et moins chronophage d'un utilisateur pour l'accès, depuis un réseau informatique, à une application SaaS hébergée sur un serveur externe audit réseau informatique.

Il est aussi un but de la présente invention de proposer une solution d'authentification d'un utilisateur pour l'accès, depuis un réseau informatique, à une application SaaS hébergée sur un serveur externe audit réseau informatique, permettant une gestion plus simple des droits d'accès informatique.

### Exposé de l'invention

L'invention permet d'atteindre au moins l'un des buts précités par un procédé d'authentification d'un utilisateur se trouvant dans un réseau informatique, en vue d'accéder à une application en mode SaaS hébergé par un serveur d'application externe audit réseau informatique, ledit procédé comprenant les étapes suivantes :
- authentification, dite interne, dudit utilisateur auprès d'un serveur d'identification dudit réseau informatique, avec un identifiant utilisateur et un appareil utilisateur dudit réseau informatique ;
- émission, par ledit appareil utilisateur vers un serveur IDAAS externe audit réseau informatique, d'une requête d'authentification ; et
- authentification, dite externe, dudit utilisateur auprès dudit serveur IDAAS, comprenant les étapes suivantes :
   ▪ transmission, par ledit serveur IDAAS **vers** un serveur web dudit réseau informatique, d'un premier message comprenant un identifiant d'événement associé audit appareil utilisateur, et
   ▪ récupération, par ledit serveur web, dudit identifiant utilisateur,
   ▪ transmission, par ledit serveur web **vers** le serveur IDAAS, d'un deuxième message comprenant ledit identifiant utilisateur pour une authentification dudit utilisateur auprès dudit serveur IDAAS.

En d'autres termes, l'invention propose de réaliser un accès et une authentification de l'utilisateur auprès d'un serveur IDAAS, en vue d'accéder à une application SaaS, en utilisant l'authentification qu'il a réalisée pour accéder au réseau informatique. Ainsi, depuis l'intérieur du réseau de l'entreprise, l'utilisateur ne s'authentifie qu'une seule fois à la fois pour accéder au réseau de l'entreprise et pour accéder aux applications SaaS pour lesquels l'accès est géré par un serveur IDAAS se trouvant hors du réseau de l'entreprise. Par conséquent, la solution proposée par la présente invention permet une authentification moins lourde et moins chronophage d'un utilisateur pour l'accès, depuis un réseau informatique, à une application SaaS hébergée sur un serveur d'application externe audit réseau informatique.

De plus, dans la solution proposée par la présente invention, la gestion des droits d'accès se fait de manière centralisée auprès d'un unique serveur, à savoir le serveur d'identité se trouvant dans le réseau informatique. Ainsi, il n'est pas nécessaire de gérer les droits d'accès à la fois dans le serveur d'identification interne de l'entreprise et dans le serveur IDAAS externe au réseau de l'entreprise. La gestion des droits d'accès se fait de manière plus simple, pour la création, la suppression et la modification des droits d'accès pour tel ou tel utilisateur.

Lorsque l'authentification externe de l'utilisateur se déroule avec succès, le procédé selon l'invention peut comprendre une redirection de l'appareil de cet utilisateur, et en particulier d'un navigateur Internet exécuté par ledit appareil utilisateur, vers le serveur d'applications, pour qu'il puisse accéder à l'application SaaS.

Éventuellement, une preuve d'authentification peut être mémorisée au sein de l'appareil utilisateur attestant d'une authentification réussie auprès du serveur IDAAS.

Une telle preuve d'authentification peut être un jeton d'authentification, un certificat d'authentification, une clef d'authentification, etc.

Suivant une caractéristique avantageuse, le deuxième message peut être crypté avec une clef publique du serveur IDAAS, préalablement communiqué audit serveur web.

Dans ce cas, seul le serveur IDAAS peut décrypter le deuxième message et avoir accès à l'identifiant de l'utilisateur, et plus généralement à toutes les données contenues dans le deuxième message, en décryptant le deuxième message avec sa clef privée. La clef publique du serveur IDAAS peut être communiquée au serveur web et mémorisée dans le serveur web, ou dans une mémoire accessible au serveur web.

Suivant des modes de réalisation, le deuxième message peut comprendre en outre au moins une des données suivantes :
- l'identifiant d'événement, en particulier pour identifier l'utilisateur à authentifier et/ou éviter le rejeu,
- un nom et/ou un prénom de l'utilisateur,
- une date d'événement,
- une preuve d'authentification fournie par l'authentification interne.

La preuve d'authentification interne peut par exemple être un certificat ou un jeton d'authentification fournie par le serveur d'identité au moment de l'authentification interne.

La preuve d'authentification peut être disponible au niveau du serveur d'identification, ou niveau du serveur web ou encore au niveau de l'appareil utilisateur.

Le serveur web peut récupérer l'identifiant utilisateur auprès :
- de l'appareil utilisateur, ou
- du serveur d'identification du réseau informatique.

Dans ce cas, à la réception du premier message, le serveur web demande cet identifiant au serveur d'identité ou à l'appareil utilisateur.

Préférentiellement, le serveur web obtient l'identifiant utilisateur auprès de l'appareil utilisateur.

Suivant des modes de réalisation, la récupération de l'identifiant utilisateur par le serveur web est réalisé par un programme CGI (« Common Gateway Interface ») exécuté par le serveur web.

Un tel programme peut être préalablement configuré pour les besoins de l'invention de sorte que dès que le serveur web reçoit le premier message, le programme CGI est exécuté et récupère l'identifiant utilisateur pour qu'il soit communiqué au serveur IDAAS dans le deuxième message.

Suivant des modes de réalisation, le premier message, respectivement le deuxième message, peut être transmis directement par le serveur IDAAS, respectivement le serveur web, au serveur web, respectivement au serveur IDAAS, sans passer par l'appareil utilisateur.

Suivant des modes de réalisation, le premier message, respectivement le deuxième message, peut être transmis par l'intermédiaire de l'appareil utilisateur.

Dans ce cas, le premier message est communiqué par le serveur IDAAS à l'appareil utilisateur, qui, lui, transmet le premier message au serveur web. Alternativement ou en plus, le deuxième message est communiqué par le serveur web à l'appareil utilisateur, qui, lui, transmet le deuxième message au serveur IDAAS. Autrement dit, dans ce cas, l'échange de messages entre le serveur web et le serveur IDAAS a lieu par l'intermédiaire de l'appareil utilisateur.

Suivant des modes de réalisation, l'authentification externe peut être réalisée au travers d'une application dédiée installée dans l'appareil utilisateur.

Alternativement, l'authentification externe peut être réalisée en utilisant un navigateur web au niveau de l'appareil utilisateur. En particulier :
- l'émission de la requête d'authentification au serveur IDAAS peut être réalisée un traves d'un navigateur web exécuté par l'appareil utilisateur, et
- l'échange de messages entre le serveur web et le serveur IDAAS peut être réalisé au travers dudit navigateur.

En particulier, l'utilisateur peut afficher une page Internet du serveur IDAAS pour réaliser l'authentification externe. La transmission du premier message vers le serveur web peut être réalisée par une redirection du navigateur vers une page internet de serveur web qui reçoit alors le premier message : par exemple le premier message peut se trouver en partie ou en totalité dans l'URL de redirection. Le serveur web peut alors récupérer les données, et en particulier l'identifiant d'utilisateur, et construire le deuxième message et éventuellement le crypter. Puis, une nouvelle redirection du navigateur vers une page internet de serveur IDAAS peut être réalisée de sorte que ledit serveur IDAAS reçoit le deuxième message : par exemple le deuxième message peut se trouver en partie ou en totalité dans l'URL de redirection.

Les redirections peuvent être transparentes pour l'utilisateur. Éventuellement, un message d'attente ou d'information peut être affiché dans le navigateur pour faire patienter l'utilisateur ou pour l'informer sur le processus d'authentification.

Suivant des modes de réalisation, l'étape d'authentification externe peut être déclenchée suite à une sélection manuelle de l'utilisateur de ladite authentification externe.

Par exemple, l'utilisateur peut valider son intention de réaliser l'authentification externe en sélectionnant un bouton associé à ladite authentification qui est alors exécutée.

Suivant des modes de réalisation, l'étape d'authentification externe peut être déclenchée de manière automatique en fonction d'au moins une donnée relative audit appareil utilisateur.

Par exemple, une adresse MAC ou une adresse IP de l'appareil utilisateur émettant la requête d'authentification peut être détectée par le serveur IDAAS. Si l'adresse IP provient d'un réseau informatique connu bénéficiant de l'authentification externe auprès dudit serveur IDAAS, alors le serveur IDAAS peut lancer l'étape d'authentification externe de manière automatique.

Dans ce cas, l'authentification externe peut être entièrement transparente pour l'utilisateur.

Suivant des modes de réalisation, lorsque l'identifiant utilisateur est connu par le serveur IDAAS, l'authentification externe peut être terminée et l'utilisateur peut être considérée authentifié auprès du serveur IDAAS.

En effet, si l'identifiant utilisateur est connu par le serveur IDAAS, cela veut dire que cet utilisateur est déjà connu du serveur IDAAS car il a déjà bénéficié de l'authentification externe. Comme il a déjà été authentifié par le serveur d'identification du réseau informatique, cela veut dire qu'il dispose des droits d'accès lui permettant d'accéder à des applications SaaS.

Suivant des modes de réalisation, lorsque l'identifiant utilisateur n'est pas connu par le serveur IDAAS, l'authentification externe peut comprendre une étape d'enrôlement dudit utilisateur auprès du serveur IDAAS.

Cette étape d'enrôlement peut être réalisée suivant toute solution d'enrôlement connue, tel que par exemple l'émission d'un lien d'activation vers une adresse mail, ou d'un code de validation vers un numéro de téléphone, etc. Cette étape d'enrôlement peut comprendre la fourniture de données additionnelles par l'utilisateur au serveur IDAAS tel que l'adresse mail, un numéro de téléphone, etc.

Suivant un autre aspect de la même invention, il est proposé un système d'authentification d'un utilisateur, depuis un réseau informatique, en vue d'accéder à une application en mode SaaS hébergée dans un serveur d'application externe audit réseau informatique, ledit système comprenant :
- un appareil utilisateur se trouvant au sein dudit réseau informatique ;
- un serveur d'identité dudit réseau informatique se trouvant au sein dudit réseau informatique ;
- un serveur web se trouvant au sein dudit réseau informatique ; et
- un serveur d'identité as a service, serveur IDAAS, se trouvant hors dudit réseau informatique ;
configurés pour mettre en œuvre les étapes du procédé selon l'invention.

L'appareil utilisateur peut exécuter un navigateur Internet utilisé lors de l'authentification externe.

Le serveur web peut exécuter un CGI pour récupérer l'identifiant utilisateur auprès de l'appareil utilisateur ou du serveur d'identité du réseau informatique.

De manière générale, les éléments du système peuvent être configurés pour réaliser chacune des caractéristiques décrites plus haut en référence au procédé selon l'invention et qui ne sont pas reprises ici par soucis de concision.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé d'authentification selon l'invention ; et
- la FIGURE 2 est une représentation schématique d'un exemple de réalisation non limitatif d'un système d'authentification selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

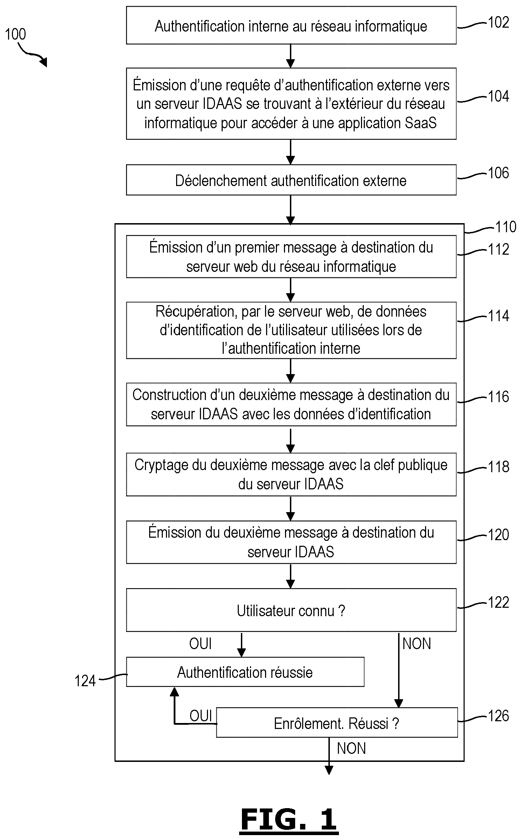

La FIGURE 1 est une représentation schématique d'un exemple de réalisation non limitatif d'un procédé d'authentification selon l'invention.

Le procédé 100, représenté sur la FIGURE 1, peut être mis en œuvre pour authentifier un utilisateur, se trouvant dans un réseau informatique donné, en vue d'autoriser ledit utilisateur à accéder à une application SaaS hébergé sur un serveur d'application se trouvant en dehors du réseau informatique.

Le procédé 100 comprend une étape 102 d'authentification, dite authentification interne, d'un utilisateur sur un appareil utilisateur se trouvant dans un réseau informatique, tel que par exemple un réseau d'entreprise. Le réseau informatique peut être un réseau local à un site géographique, ou un réseau distribué sur plusieurs sites.

L'authentification interne peut être réalisée en entrant un identifiant utilisateur et un mot de passe de l'utilisateur.

L'authentification interne peut être réalisée suivant un mécanisme d'authentification donné, tel que par exemple l'authentification Windows^{®}.

L'authentification interne est réalisée en vérifiant les droits d'accès de l'utilisateur auprès d'un serveur d'identification mémorisant pour chaque identifiant utilisateur les droits d'accès qui y sont associés : accès autorisé ou non, niveau d'accès, types de données accessible, etc.

Lorsque l'authentification est réalisée avec succès, une preuve d'authentification est produite, tel que par exemple un certificat d'authentification, un jeton d'authentification ou encore une clef d'authentification, tel que par exemple dans le mécanisme d'authentification Kerberos. Cette preuve d'authentification peut être mémorisée au niveau de l'appareil utilisateur et/ou au près du serveur d'identification.

Après authentification interne, l'utilisateur peut accéder aux services/données se trouvant au sein du réseau informatique avec l'appareil utilisateur.

Le procédé 100 comprend ensuite une étape 104 d'émission d'une requête d'authentification, dite authentification externe, vers un serveur IDAAS, pour accéder à une ou des applications en mode SaaS hébergées sur un ou plusieurs serveurs d'application se trouvant hors du réseau informatique.

Le serveur IDAAS se trouve à l'extérieur du réseau informatique et gère l'accès et l'authentification des utilisateurs aux applications en mode SaaS.

La requête d'authentification peut être émise de différentes façons. Suivant un exemple de réalisation, l'utilisateur se connecte sur une page d'authentification du serveur IDAAS grâce à un navigateur Internet exécuté par l'appareil utilisateur qu'il utilise, par exemple en saisissant l'URL de ladite page d'authentification.

Le procédé 100 comprend ensuite une étape 106 déclenchement de l'authentification externe.

L'authentification externe peut être déclenchée manuellement par l'utilisateur, par exemple en sélectionnant un bouton associé à ladite authentification externe, affichée sur la page d'authentification.

Alternativement, l'authentification externe peut être déclenchée de manière automatique en fonction par exemple, d'une adresse IP de l'appareil utilisateur détectée par le serveur IDAAS. En effet, si l'adresse IP provient d'un réseau informatique connu bénéficiant de l'authentification externe auprès dudit serveur IDAAS, alors le serveur IDAAS peut lancer l'étape d'authentification externe de manière automatique.

Le procédé 100 comprend ensuite une étape 110 d'authentification externe.

L'étape d'authentification 110 externe comprend une étape 112 d'émission d'un premier message vers un serveur web se trouvant dans le réseau informatique. Ce premier message comprend un identifiant d'événement. L'identifiant d'événement peut être, ou peut comprendre, un identifiant de l'appareil utilisateur ou encore l'adresse IP de l'appareil utilisateur.

Le premier message peut être envoyé directement vers le serveur web. Alternativement, le premier message peut être envoyé au serveur web par l'intermédiaire de l'appareil utilisateur.

Suivant un exemple de réalisation non limitatif, et particulièrement avantageux, le premier message est envoyé par une redirection du navigateur exécuté par l'appareil utilisateur vers une page d'authentification du serveur web. Pour ce faire, l'URL de la page d'authentification du serveur web peut être préalablement renseigné et mémorisée au niveau du serveur IDAAS. Le premier message peut être accolé audit URL de la page d'authentification du serveur web.

Ensuite, lors d'une étape 114 le serveur web du réseau informatique récupère l'identifiant utilisateur de l'utilisateur. Pour ce faire, le serveur web exécute un programme CGI (« Common Gateway Interface ») qui récupère l'identifiant utilisateur auprès de l'appareil utilisateur, éventuellement après avoir vérifié la preuve d'authentification mémorisée au niveau dudit appareil utilisateur.

Ensuite, lors d'une étape 116 un deuxième message est construit, par le programme CGI ou par le serveur web, avec l'identifiant utilisateur et éventuellement au moins une des données suivantes :
- l'identifiant d'événement, en particulier pour identifier l'utilisateur à authentifier et/ou éviter le rejeu,
- un nom et/ou un prénom de l'utilisateur,
- une date d'événement,
- une preuve d'authentification fournie par l'authentification interne.

Lors d'une étape 118, le deuxième message est crypté par une clef publique du serveur IDAAS de sorte qu'il ne peut être lu que par le serveur IDAAS. La clef publique du serveur IDAAS peut être préalablement communiquée au serveur web, par exemple au moment de la configuration du serveur web pour la réalisation de l'authentification externe.

L'étape d'authentification 110 externe comprend ensuite une étape 120 d'émission du deuxième message vers le serveur IDAAS.

Le deuxième message peut être envoyé directement vers le serveur IDAAS par le serveur web. Alternativement, le deuxième message peut être envoyé au serveur IDAAS par l'intermédiaire de l'appareil utilisateur.

Suivant un exemple de réalisation non limitatif, et particulièrement avantageux, le deuxième message peut être envoyé au serveur IDAAS par, ou en même temps qu'une redirection du navigateur exécuté par l'appareil utilisateur vers une page Internet du serveur IDAAS. Pour ce faire, l'URL de la page Internet du serveur IDAAS peut être préalablement renseigné et mémorisé au niveau du serveur web. Le deuxième message peut être accolé audit URL.

Lors d'une étape 122, le serveur IDAAS décrypte le deuxième message pour obtenir l'identifiant utilisateur. Cet identifiant utilisateur est comparé à la liste des identifiants utilisateurs connus du serveur IDAAS.

Si l'identifiant utilisateur est connu par le serveur IDAAS, alors l'utilisateur est authentifié et l'accès aux applications SaaS est autorisé lors d'une étape 124.

Dans le cas contraire, une étape 126 d'enrôlement est réalisée suivant des techniques connues. L'accès n'est autorisé que si l'étape d'enrôlement est exécutée avec succès. Dans le cas contraire, aucun accès n'est autorisé et l'authentification peut reprendre à l'étape 102 ou 106 selon les cas.

Lorsque l'authentification externe 110 de l'utilisateur se déroule avec succès, le procédé 100 peut comprendre une redirection, par le serveur IDAAS, l'appareil de cet utilisateur, et en particulier son navigateur, vers le serveur d'applications pour qu'il puisse accéder à l'application SaaS. Éventuellement, une preuve d'authentification est mémorisée au sein de l'appareil utilisateur attestant d'une authentification réussie auprès du serveur IDAAS. Une telle preuve d'authentification peut être un jeton, un certificat, une clef, etc.

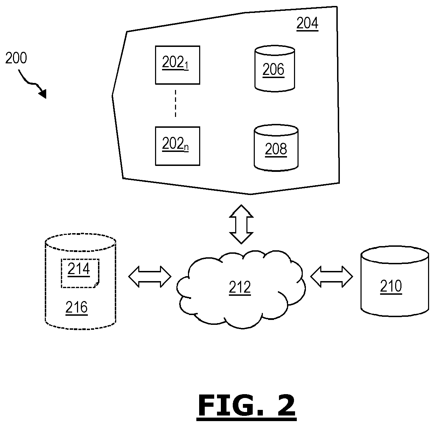

La FIGURE 2 est une représentation schématique d'un exemple de réalisation non limitatif d'un système d'authentification selon l'invention.

Le système 200, représenté sur la FIGURE 2, peut être utilisé pour mettre en œuvre tout procédé selon l'invention, et en particulier le procédé 100 de la FIGURE 1.

Le système 200 comprend au moins un appareil utilisateur 202₁-202ₙ se trouvant au sein d'un réseau informatique 204, tel qu'un réseau d'entreprise. Chaque appareil utilisateur peut être un ordinateur, une tablette, un Smartphone, etc.

Le système 200 comprend en outre au moins un serveur d'identité 206 pour gérer l'authentification des appareils se trouvant dans le réseau informatique conformément à un mécanisme d'authentification donné. Le serveur d'identification mémorise les données d'authentification de chaque utilisateur autorisé à se connecter au réseau informatique 204.

Le système 208 comprend un serveur web 208 pour gérer l'authentification externe de chaque utilisateur auprès d'un serveur IDAAS 210 se trouvant à l'extérieur du réseau informatique 204. Le réseau informatique 204 et le serveur IDAAS 210 sont en communication au travers du réseau Internet 212.

Ainsi, un utilisateur qui s'est authentifié au sein du réseau informatique 204 par l'intermédiaire d'un appareil utilisateur 202ᵢ peut ensuite bénéficier de cette authentification, interne au réseau informatique, pour s'authentifier auprès du serveur IDAAS 210 en vue d'accéder à des applications SaaS 214 hébergées sur un serveur d'applications 216. Le serveur d'application 216 est en communication avec le réseau informatique 204 et le serveur IDAAS 210 au travers du réseau Internet 212.

Bien entendu, ces exemples sont donnés à titre d'exemples particuliers uniquement et l'invention n'est pas limitée aux exemples détaillés ci-dessus. De nombreuses variantes peuvent être imaginées aux exemples donnés ci-dessus sans sortir du cadre de l'invention telle que définie dans les revendications principales.

## Revendications

1. Procédé (100) d'authentification d'un utilisateur se trouvant dans un réseau informatique (204), en vue d'accéder à une application en mode SaaS (214) hébergé par un serveur d'application (216) externe audit réseau informatique (204), ledit procédé (100) comprenant les étapes suivantes :
- authentification (102), dite interne, dudit utilisateur auprès d'un serveur d'identification (206) dudit réseau informatique (204), avec un identifiant utilisateur et un appareil utilisateur (202₁-202ₙ) dudit réseau informatique (204) ;
- émission (104), par ledit appareil utilisateur (202₁-202ₙ) vers un serveur IDAAS (210) externe audit réseau informatique (204), d'une requête d'authentification ; et
- authentification (110), dite externe, dudit utilisateur auprès dudit serveur IDAAS (210), comprenant les étapes suivantes :
▪ transmission (112), par ledit serveur IDAAS (210) **vers** un serveur web (208) dudit réseau informatique (204), d'un premier message comprenant un identifiant d'événement associé audit appareil utilisateur (202₁-202ₙ),
▪ récupération, par ledit serveur web (208), dudit identifiant utilisateur,
▪ transmission (120), par ledit serveur web (208) **vers** le serveur IDAAS (210), d'un deuxième message comprenant ledit identifiant utilisateur pour une authentification dudit utilisateur auprès dudit serveur IDAAS (210).

2. Procédé (100) selon la revendication précédente, **caractérisé en ce que** le deuxième message est crypté avec une clef publique du serveur IDAAS (210), préalablement communiquée audit serveur web (208).

3. Procédé (100) selon l'une quelconque des revendications précédentes, **caractérisé en ce que** le deuxième message comprend en outre au moins une des données suivantes :
- l'identifiant d'événement,
- un nom et/ou un prénom de l'utilisateur,
- une date d'événement,
- une preuve d'authentification fournie par l'authentification interne.

4. Procédé (100) selon l'une quelconque des revendications précédentes, **caractérisé en ce que** le serveur web (208) récupère l'identifiant utilisateur auprès :
- de l'appareil utilisateur (202₁-202ₙ), ou
- du serveur d'identification (206) du réseau informatique (204).

5. Procédé (100) selon l'une quelconque des revendications précédentes, **caractérisé en ce que** la récupération de l'identifiant utilisateur par le serveur web (208) est réalisé par un programme CGI (« Common Gateway Interface ») exécuté par le serveur web (208).

6. Procédé (100) selon l'une quelconque des revendications précédentes, **caractérisé en ce que** le premier message, respectivement le deuxième message, est transmis par l'intermédiaire de l'appareil utilisateur (202₁-202ₙ).

7. Procédé (100) selon l'une quelconque des revendications précédentes, **caractérisé en ce que** :
- l'émission de la requête d'authentification au serveur IDAAS (210) est réalisée un traves d'un navigateur web exécuté par l'appareil utilisateur (202₁-202ₙ), et
- l'échange de message entre le serveur web (208) et ledit serveur IDAAS (210) est réalisé au travers dudit navigateur.

8. Procédé (100) selon l'une quelconque des revendications précédentes, **caractérisé en ce que** l'étape d'authentification externe (110) est déclenchée suite à une sélection manuelle de l'utilisateur de ladite authentification externe.

9. Procédé (100) selon l'une quelconque des revendications 1 à 7, **caractérisé en ce que** l'étape d'authentification externe (110) est déclenchée de manière automatique en fonction d'au moins une donnée relative audit appareil utilisateur (202₁-202ₙ).

10. Procédé (100) selon l'une quelconque des revendications précédentes, **caractérisé en ce que**, lorsque l'identifiant utilisateur est connu par le serveur IDAAS (210), l'authentification externe (110) est terminée et l'utilisateur est considérée authentifié auprès du serveur IDAAS (210).

11. Procédé (100) selon l'une quelconque des revendications précédentes, **caractérisé en ce que**, lorsque l'identifiant utilisateur n'est pas connu par le serveur IDAAS (210), l'authentification externe (110) comprend une étape (126) d'enrôlement dudit utilisateur auprès du serveur IDAAS (210).

12. Système (200) d'authentification d'un utilisateur, depuis un réseau informatique (204), en vue d'accéder à une application (214) en mode SaaS hébergée dans un serveur d'application (216) externe audit réseau informatique (204), ledit système (200) comprenant :
- un appareil utilisateur (202₁-202ₙ) se trouvant au sein dudit réseau informatique (204) ;
- un serveur d'identité (206) dudit réseau informatique (204) se trouvant au sein dudit réseau informatique (204) ;
- un serveur web (208) se trouvant au sein dudit réseau informatique (208) ; et
- un serveur d'identité as a service (210), serveur IDAAS, se trouvant hors dudit réseau informatique (204) ;
configurés pour mettre en œuvre les étapes du procédé (100) selon l'une quelconque des revendications précédentes.
